# EUROPÄISCHE PATENTSCHRIFT

(11) **EP 2 691 674 B1**
(45) Veröffentlichungstag und Bekanntmachung des Hinweises auf die Patenterteilung: **10.02.2016**
(21) Anmeldenummer: 12714951.6
(22) Anmeldetag: 30.03.2012
(51) Int. Cl.: F16H 61/30

(54) **PNEUMATISCHE SCHALTKRAFTUNTERSTÜTZUNGSEINRICHTUNG**
PNEUMATIC SHIFTING FORCE SUPPORTING DEVICE
DISPOSITIF PNEUMATIQUE D'ASSISTANCE DE FORCE DE CHANGEMENT DE RAPPORT

(30) Priorität: 31.03.2011 DE 102011015713
(43) Veröffentlichungstag der Anmeldung: 05.02.2014
(73) Patentinhaber: Hoerbiger Automotive Komfortsysteme GmbH, 86956 Schongau (DE)
(72) Erfinder: MACKE, Wlodzimierz, 82140 Olching (DE)
(74) Vertreter: Grättinger Möhring von Poschinger Patentanwälte Partnerschaft
(86) Internationale Anmeldenummer: PCT/EP2012/001403
(87) Internationale Veröffentlichungsnummer: WO 2012/130466

(56) Entgegenhaltungen:
- EP-A2- 2 068 044
- DE-A1-102006 006 652
- DE-A1-102006 048 254
- DE-A1-102007 026 421
- DE-A1-102007 048 400

## Beschreibung

Die vorliegende Erfindung betrifft eine pneumatische Schaltkraftunterstützungseinrichtung für ein Schaltgetriebe, umfassend eine einen Drucklufteinlass und eine Entlüftung aufweisende Gehäusestruktur, eine eingangsseitige, längs ihrer Achse verschiebbare Steuerstange und eine die Steuerstange umgebende, parallel zu dieser verschiebbare Ausgangseinheit, welche einen in der Gehäusestruktur dichtend geführten, zwei pneumatische Arbeitsräume definierenden Arbeitskolben umfasst, wobei funktional zwischen der Steuerstange und der Ausgangseinheit und strömungstechnisch zwischen dem Drucklufteinlass und den pneumatischen Arbeitsräumen eine Ventilanordnung vorgesehen ist, welche durch entsprechende Beaufschlagung der beiden pneumatischen Arbeitsräume eine pneumatische Folgeregelung der Ausgangseinheit zu der Steuerstange bewirkt.

Pneumatische Schaltkraftunterstützungseinrichtungen der vorstehend angegebenen Art werden insbesondere bei Lastkraftwagen eingesetzt. Sie entlasten den Fahrer des betreffenden Fahrzeugs, indem sie die von diesem beim Einlegen eines Ganges bzw. beim Gangwechsel an dem Schalthebel aufzubringende Kraft maßgeblich reduzieren. In der Praxis existieren verschiedene derartige Schaltkraftunterstützungseinrichtungen.

An Schaltkraftunterstützungseinrichtungen der genannten Art werden unterschiedliche Anforderungen, die teilweise in einem gewissen Zielkonflikt zueinander stehen, gestellt. Zu den üblichen an Kraftfahrzeugausstattung gestellten Anforderungen (kostengünstig, leicht, kompakt, leistungsfähig, zuverlässig, wartungsarm, langlebig) treten besondere, spezifische Anforderungen hinzu, die im Zusammenhang stehen mit den sich ändernden Randbedingungen in ein und derselben Anwendungsumgebung. So ist beispielsweise getriebeseitig bei dem Einlegen unterschiedlicher Gänge ein unterschiedlicher Kraftbedarf erforderlich. Besteht die Zielsetzung darin, dass der Fahrer zum Einlegen sämtlicher Gänge im Wesentlichen dieselbe Kraft auf den Schalthebel ausüben soll, so muss dementsprechend die Kraftverstärkung beim Einlegen einiger Gänge größer ausfallen als beim Einlegen anderer Gänge. Schaltkraftunterstützungseinrichtungen, die bisher zur Lösung dieses Problems vorgeschlagen wurden, sind typischerweise außerordentlich komplex und aufwendig aufgebaut. Ein weiterer Problemkreis lässt sich mit den dynamischen Anforderungen an die Schaltkraftunterstützungseinrichtung umschreiben. Nicht nur, dass unterschiedliche Fahrer unterschiedlich dynamisch den Schalthebel betätigen, wobei jeder Fahrer eine für ihn optimale Unterstützung durch die Schaltkraftunterstützungseinrichtung erwartet. Auch erfordern verschiedene Fahrsituationen unterschiedliche dynamische Schaltvorgänge. Insbesondere ist bei Steigungsfahrten ein besonders rascher Gangwechsel erforderlich, um das Rückfallen des Fahrzeugs (Rückgang der Geschwindigkeit) während eines Gangwechsels zu minimieren. Bei Schaltkraftunterstützungseinrichtungen, die auf eine entsprechend hohe Schaltdynamik ausgelegt sind, besteht allerdings die Gefahr, dass sie bei einer Betätigung des Schalthebels mit einer geringeren Dynamik übersteuern und auf diese Weise zu internen Schlägen bzw. Vibrationen und/oder Schlägen bzw. Vibrationen auf den Schalthebel führen.

Eine pneumatische Schaltkraftunterstützungseinrichtung gemäß dem Oberbegriff des Anspruchs 1 geht aus der EP-A2- 2068044 herror.

Im Lichte der vorstehend aufgezeigten Problemstellung liegt der vorliegenden Erfindung die Aufgabe zugrunde, eine Schaltkraftunterstützungseinrichtung der eingangs angegebenen Art bereit zu stellen, die - bei Erfüllung der weiter oben genannten üblichen Anforderungen - sich durch eine besonders günstiges Verhalten hinsichtlich der Übertragungsdynamik bei unterschiedlichsten Betriebsbedingungen auszeichnet.

Gelöst wird diese Aufgabenstellung gemäß der vorliegenden Erfindung, indem bei einer Schaltkraftunterstützungseinrichtung der eingangs angegebenen Art, die zwei mit der Steuerstange gekoppelte, an der Ausgangseinheit dichtend verschiebbar geführte Ventilkolben und zwei mit der Steuerstange gekoppelte ringförmige Dichtkanten, welche jeweils mit einem relativ zur Steuerstange sowie zur Ausgangseinheit längsverschiebbar geführten Ventilschieber zusammenwirken, umfasst, jeder der beiden Ventilschieber weiterhin jeweils mit einem der Ausgangseinheit zugeordneten Ventilsitz zusammenwirkt und zumindest einem Ventilkolben, bevorzugt beiden Ventilkolben je ein relativ zu diesem verschiebbarer Drosselschieber zugeordnet ist, der eine mit dem jeweils zugeordneten Ventilsitz zusammenwirkende Schließkante aufweist und mindestens eine Drosselpassage begrenzt, deren Querschnittsfläche von der relativen Position des Drosselschiebers bezogen auf den zugeordneten Ventilkolben abhängt. Eines der im synergistisch-funktionalen Zusammenwirken mit den übrigen konstruktiven Merkmalen der erfindungsgemäßen Schaltkraftunterstützungseinrichtung besonders wesentlichen Merkmale besteht demgemäß darin, dass mindestens einem, bevorzugt jedem der beiden mit der Steuerstange gekoppelten, an der Ausgangseinheit dichtend verschiebbar geführten Ventilkolben funktional und räumlich ein Drosselschieber zugeordnet ist, welcher relativ zu dem betreffenden Ventilkolben verschiebbar ist, wobei sich je nach der relativen Stellung des Drosselschiebers zu dem zuordneten Ventilkolben eine bestimmte Querschnittsfläche einer Drosselpassage einstellt, welche u.a. durch den Drosselschieber begrenzt ist. Die jeweils mindestens eine genannte Drosselpassage liegt dabei im Strömungsweg von dem Drucklufteinlass zu dem jeweils betreffenden pneumatischen Arbeitsraum. Sie bewirkt demgemäß, dass der Grad der Beaufschlagung (Druckluftstrom) des betreffenden pneumatischen Arbeitsraumes abhängt von der Stellung des Drosselschiebers relativ zu dem zugeordneten Ventilkolben. Je größer - durch entsprechende relative Position des Drosselschiebers bezogen auf den zugeordneten Ventilkolben - die Querschnittsfläche der Drosselpassage ist, desto schneller wird der zugeordnete pneumatische Arbeitsraum mit Druckluft beaufschlagt mit entsprechender Auswirkung auf die Schaltdynamik, insbesondere im Sinne der Dynamik des Aufbaus der vollständigen Schaltkraftverstärkung.

Zur Vereinfachung der weiteren Erläuterung der vorliegenden Erfindung wird nachstehend, soweit sich nichts Anderes ergibt, auf die bevorzugte, indessen keineswegs zwingende Ausführung abgestellt, bei der sowohl die beiden Ventilkolben als auch die beiden ringförmigen Dichtkanten lagefest mit der Steuerstange gekoppelt sind und jedem der beiden Ventilkolben ein relativ zu diesem verschiebbarer Drosselschieber zugeordnet ist. Eine Beschränkung der vorliegenden Erfindung auf eine solche Ausführung lässt sich daraus nicht herleiten.

Indem jeder der beiden Drosselschieber über eine Dichtkante mit dem jeweils zugeordneten, relativ zu der Ausgangseinheit lagefest angeordneten Ventilsitz .zusammenwirkt, lässt sich das Maß, um welches die Steuerstange der Ausgangseinheit voreilt bzw. letztere der Steuerstange nacheilt, unmittelbar für ein Steuern der Querschnittsflächen der Drosselpassagen heranziehen, und zwar typischerweise dahingehend, dass die Querschnittsfläche (ohne dass zwingend ein linearer Zusammenhang bestehen muss) bei zunehmendem Voreilen der Steuerstange relativ zur Ausgangseinheit zunimmt. Da dies sich umgekehrt auch dahingehend auswirkt, dass sich die Querschnittsfläche der mindestens einen dem beaufschlagten Arbeitsraum zugeordneten Drosselpassage reduziert, wenn sich die Ausgangseinheit ihrer durch die Position der Steuerstange vorgegebenen Sollstellung nähert und auf diese Weise eine Drosselwirkung in der besagten Drosselpassage zunimmt, ist die Gefahr, dass die Schaltkraftunterstützungseinrichtung übersteuert, selbst dann gering, wenn die Schaltkraftunterstützungseinrichtung für eine hochdynamische Schaltkraftunterstützung ausgelegt ist. Im Ergebnis stellt die vorliegende Erfindung somit eine Schaltkraftunterstützungseinrichtung bereit, die insbesondere hinsichtlich der Schaltdynamik und Unterstützungsfunktion bei unterschiedlichen Anforderungen und Randbedingungen hervorragende Eigenschaften insbesondere im Hinblick auf einen hohen Schaltkomfort aufweist, wobei zusätzlich durch die Vermeidung interner Schläge bzw. Vibrationen und entsprechende Materialschonung die Zuverlässigkeit gesteigert und die Lebensdauer erhöht werden kann.

Bei typischen Anwendungsfällen der vorliegenden Erfindung, nämlich insbesondere bei ungeregelten Schaltkraftunterstützungseinrichtungen, sind vorteilhafterweise die beiden Ventilkolben lagefest mit der Steuerstange gekoppelt. Das Gleiche gilt für die ringförmigen Dichtkanten, die insbesondere jeweils an derselben baulichen Einheit wie der jeweilige zugeordnete Ventilkolben ausgeführt sein können. Bei in Anwendung der vorliegenden Erfindung ausgeführten mehrstufigen, d.h. mit interner geregelter Druckreduzierung ausgestatteten Schaltkraftunterstützungseinrichtungen wird allerdings hiervon abgewichen, indem insbesondere die beiden Ventilkolben sowie die diesen jeweils zugeordneten ringförmigen Dichtkanten mit der Steuerstange in deren Achsrichtung verschiebbar gekoppelt sein können, namentlich mittels einer Feder gegen einen Anschlag vorgespannt.

Durch individuelle, an das jeweilige Getriebe angepasste Gestaltung der Drosselpassagen hinsichtlich ihrer Drosselcharakteristik lässt sich der Schaltkomfort weiterhin positiv beeinflussen. In diesem Sinne kann unter entsprechenden Voraussetzungen von einer linearen Drosselcharakteristik, bei der sich die Querschnittsfläche der Drosselpassage über deren axiale Erstreckung linear ändert, dahingehend abgewichen werden, dass die Drosselpassage eine progressive Charakteristik im Sinne einer progressiven Vergrößerung ihrer Querschnittsfläche über ihre axiale Erstreckung oder aber eine degressive Charakteristik im Sinne einer degressiven Vergrößerung ihrer Querschnittsfläche über ihre axiale Erstreckung aufweist. Qualitative betrachtet nimmt der Gradient der Geschwindigkeit des Druckaufbaus in dem beaufschlagten pneumatischen Arbeitsraum im Falle einer progressiven Drosselcharakteristik mit zunehmender Relativverschiebung der Steuerstange gegenüber der Ausgangseinheit zu, bei einer degressiven Drosselcharakteristik indessen ab.

Sind mehrere mit einem Drosselschieber zusammenwirkende Drosselpassagen vorgesehen, so ist nicht zwingend, dass diese eine einheitliche axiale Erstreckung aufweisen. Vielmehr können beispielsweise durch einen entsprechenden axialen Versatz der Öffnungskanten der Drosselpassagen bei einer fortgesetzten axialen Verschiebung des Drosselschiebers sukzessive nacheinander einzelne Drosselpassagen freigegeben, d.h. für eine Durchströmung geöffnet werden. In diesem Falle lassen sich insbesondere unstetig verlaufende Drosselcharakteristiken generieren, z.B. solche mit sprunghaften Vergrößerungen der insgesamt für die Durchströmung zur Verfügung stehenden Querschnittsfläche. Dabei kann beispielsweise auch jede einzelne der Drosselpassagen über ihre individuelle Erstreckung einen konstanten Querschnitt aufweisen, so dass sich für jede einzelne der Drosselpassagen eine (sprunghafte) Veränderung der Querschnittsfläche von 0% auf 100% ergibt, wenn der Drosselschieber die Öffnungskante der betreffenden Drosselpassage erreicht bzw. überstreicht. Erkennbar müssen dabei im Übrigen keineswegs sämtliche Drosselpassagen einen übereinstimmenden Querschnitt aufweisen. So kann beispielsweise die als erstes geöffnete Drosselpassage einen geringeren Querschnitt aufweisen als die als zweites geöffnete Drosselpassage u.s.w.

Gemäß einer ersten bevorzugten, hinsichtlich des baulichen Aufwandes besonders günstigen Weiterbildung der Erfindung sind die beiden Ventilkolben jeweils Teil einer auf der Steuerstange angebrachten Kolbenstruktur, welche weiterhin einen die mindestens eine Drosselpassage - zusätzlich zum Drosselschieber - begrenzenden zylindrischen Ansatz umfasst. Dabei können die Drosselschieber insbesondere hülsenförmig ausgebildet und auf dem jeweils zugeordneten Ansatz der betreffenden Kolbenstruktur längsverschieblich geführt sein. In abermals vorteilhafter Weiterbildung kann dabei die jeweils mindestens eine Drosselpassage eine in dem jeweiligen Ansatz der - auch den Ventilkolben umfassenden - Kolbenstruktur ausgeführte Nut umfassen, wobei sich in axialer Richtung der Steuerstange die radiale Tiefe und/oder die in Umfangsrichtung gemessene Breite der Nut verändert. Über das auf diese Weise erreichbare Profil der Querschnittsveränderung über die relative Position des Drosselschiebers bezogen auf den zugeordneten Ventilkolben lässt sich die Charakteristik der Drosselwirkung abstimmen.

Im Interesse einer möglichst gleichmäßigen strömungsdynamischen Einwirkung der Druckluftströmung auf die beiden Drosselschieber ist es gemäß einer anderen bevorzugten Weiterbildung der Erfindung jedenfalls dann, wenn die Drosselschieber in den vorstehend dargelegten Sinne hülsenförmig ausgeführt sind, vorteilhaft, wenn jeweils mindestens zwei oder noch mehr Drosselpassagen vorgesehen sind, die gleichmäßig um die Achse herum angeordnet sind; denn auf diese Weise wird das Risiko eines Verkantens des Drosselschiebers reduziert.

Gemäß einer anderen bevorzugten Weiterbildung der Erfindung wirkt auf die beiden Drosselschieber jeweils eine sich an dem zugeordneten Ventilkolben (oder einem sonstigen lagefest mit der Steuerstange gekoppelten Bauteil) abstützende Vorspannfeder. Mittels einer solchen Vorspannfeder wird namentlich der Drosselschieber in jene Stellung vorgespannt, in der - über die mit dem jeweils zugeordneten Ventilsitz zusammenwirkende Schließkante - eine Abdichtung des Drosselschiebers relativ zum Ventilsitz erfolgt. Druckluft, die - aufgrund einer entsprechenden relativen Stellung der Steuerstange zur Ausgangseinheit - auf der betreffenden Seite der Ventilanordnung zwischen dem Ventilschieber und dem Ventilsitz hindurch tritt, wird durch die dichtende Anlage der Drosselschieber-Schließkante an dem Ventilsitz zuverlässig durch die erfindungsgemäß vorgesehene, weiter oben erläuterte, eine veränderbare Querschnittsfläche aufweisende Drosselpassage gezwungen, d.h. eine Umgehung der Drosselpassage wird unterbunden bzw. stark begrenzt. In diesem Zusammenhang ist darauf hinzuweisen, dass der Begriff "Schließkante" nicht dahingehend verstanden werden darf, dass, wenn die Schließkante an dem Ventilsitz anliegt, dort eine (technisch durchaus mögliche) vollständige Abdichtung erfolgt. Vielmehr kann im Rahmen der vorliegenden Erfindung auch eine (nur) weitgehende Abdichtung zwischen Drosselschieber-Schließkante und Ventilsitz in Betracht kommen. Eine solche nur weitgehende Abdichtung, insbesondere indem eine gewollte Undichte (z.B. mittels einer definierten Kerbe) vorgesehen wird, kann sogar bewusst angestrebt werden, um eine von der Drosselpassage unabhängige Grundversorgung des jeweils mit Druckluft beaufschlagten pneumatischen Arbeitsraumes zu gewährleisten.

Gemäß einer nochmals anderen bevorzugten Weiterbildung der Erfindung sind die beiden Ventilsitze jeweils lagefest direkt an der Ausgangseinheit angeordnet. Besonders bevorzugt befindet sich zwischen den beiden Ventilsitzen eine Distanzhülse. Ein beidseits durch die Ventilsitze begrenzter Druckluftraum kann dabei ständig mit dem Drucklufteinlass in Verbindung stehen. Radial nach innen ist der besagte Druckluftraum besonders bevorzugt durch die beiden Ventilschieber begrenzt, so dass diese besonders bevorzugt relativ zueinander abgedichtet sind. In baulicher Hinsicht können die beiden Ventilschieber insbesondere aus Kunststoff bestehen, wobei an einem der beiden Ventilschieber eine aus Elastomer bestehende Dichtung angeordnet sein kann, welche auf einer zugeordneten zylindrischen Dichtfläche des anderen Ventilschiebers gleitend dichtend geführt ist. Die beiden Ventilschieber sind, wie dargelegt, sowohl relativ zur Steuerstange als auch relativ zu der Ausgangseinheit verschiebbar. In baulicher Hinsicht besonders günstig ist es dabei, wenn sie direkt auf der Steuerstange längsverschieblich geführt sind.

Eine nochmals andere bevorzugte Weiterbildung der Erfindung zeichnet sich dadurch aus, dass zwischen den beiden Ventilschiebern eine Druckfederanordnung wirkt, welche die Ventilschieber jeweils gegen den zugeordneten Ventilsitz vorspannt. Das Abheben des einen bzw. anderen Ventilschiebers von dem zugeordneten Ventilsitz erfolgt dabei - je nach der Auslenkung der Steuerstange relativ zur Ausgangseinheit aus der neutralen Position - durch die betreffende, mit der Steuerstange gekoppelte Dichtkante, die insbesondere an der (auch den zugeordneten Ventilkolben umfassenden) Kolbeneinheit angeordnet sein kann, wobei die betreffende Dichtkante dann dichtend an dem zugeordneten Ventilschieber anliegt, so dass Druckluft, die durch das entsprechend geöffnete Ventil - zwischen dem Ventilsitz und dem Ventilschieber - hindurch tritt, zwingend der mindestens einen Drosselpassage zugeführt wird.

Gemäß einer abermals anderen bevorzugten Weiterbildung der Erfindung begrenzt jeder der Ventilkolben einen Steuerraum, der über eine in diesen mündende, in der Ausgangseinheit angeordnete Passage mit dem zugeordneten pneumatischen Arbeitsraum kommuniziert und bei von dem zugeordneten Ventilschieber abgehobener Dichtkante des Ventilkolbens über eine in der Steuerstange vorgesehene Abluftpassage mit der Entlüftung kommuniziert. Im Interesse einer stabilen neutralen Lage von Steuerstange und Ausgangseinheit zueinander ist in dieser auf beiden Seiten der Ventilanordnung jeweils die Dichtkante (der Kolbeneinheit) von dem Ventilschieber abgehoben, so dass beide Steuerräume an die Entlüftung angeschlossen sind, wodurch auch die beiden pneumatischen Arbeitsräume drucklos sind.

In besonders bevorzugter Weiterbildung der Erfindung ist an dem äußeren Umfang des Arbeitskolbens ein mit dem Drucklufteinlass ständig in Verbindung stehender, von dem Gehäuse begrenzter Ringraum ausgebildet, welcher über eine in der Ausgangseinheit ausgeführte Druckluftpassage ständig mit dem weiter oben bereits erwähnten Druckluftraum in Verbindung steht. Auf diese Weise erfolgt eine zuverlässige Druckluftverbindung zwischen dem feststehenden Gehäuse und der relativ zu dieser bewegbaren Ausgangseinheit und entsprechend zuverlässige Druckluftversorgung der Ventilanordnung.

Wenngleich technisch möglich ist, die Ausgangseinheit einteilig aufzubauen, so ist in baulicher Hinsicht doch besonders vorteilhaft, wenn die Ausgangseinheit mehrteilig aufgebaut ist und ein Verbindungsstück, einen Träger und ein Klemmrohr umfasst, wobei der Arbeitskolben zwischen dem Klemmrohr und dem Träger eingespannt ist. Der besagte mehrteilige Aufbau der Ausgangseinheit ermöglicht in besonders günstiger Weise die bauliche Integration der Ventilanordnung und sonstiger Komponenten der Schaltkraftunterstützungseinrichtung in die Ausgangseinheit. Die Steuerstange kann dabei insbesondere in dem Verbindungsstück, welches den eigentlichen Ausgang zum Getriebe darstellt, geführt sein, und zwar unabhängig davon, ob der Eingang in die Schaltkraftunterstützungseinrichtung und der Ausgang aus der Schaltkraftunterstützungseinrichtung auf derselben Seite angeordnet sind oder aber auf verschiedenen Seiten.

In wiederum anderer bevorzugter konstruktiver Weiterbildung der Erfindung wirkt zwischen dem Steuerschieber und der Ausgangseinheit eine Zentrierfederanordnung. Diese gibt die neutrale Stellung des Steuerschiebers relativ zu der Ausgangseinheit vor. Über die Zentrierfederanordnung erfolgt überdies eine - nach Maßgabe der Federkraft - elastisch nachgiebige Koppelung der Steuerstange mit der Ausgangseinheit dergestalt, dass die von dem Fahrer auf den Schalthebel ausgeübte Kraft von der mit dem Schalthebel mechanisch gekoppelten Steuerstange über die Zentrierfederanordnung auf die Ausgangseinheit übertragen wird. Die an der Ausgangseinheit bereitgestellte Schaltkraft setzt sich somit auf zwei Anteilen zusammen, nämlich der durch den Fahrer auf den Schalthebel ausgeübten Kraft einerseits und der in dem beaufschlagten pneumatischen Arbeitsraum generierten pneumatischen Kraft andererseits. Die Zentrierfederanordnung kann dabei mechanische Anschläge umfassen, welche zwischen der Steuerstange und der Ausgangseinheit bei einer vorgegebene maximalen Auslenkung dieser beiden Teile zueinander wirken und - durch direkte mechanische Koppelung von Steuerstange und Ausgangseinheit - eine rein mechanische Betätigung des Getriebes über den Schaltheben gestatten.

Gemäß einer wiederum anderen besonders bevorzugten baulichen Weiterbildung umfasst das Gehäuse einen Gehäuseblock, ein Profilrohr und einen Abschlussdeckel, wobei die Ausgangseinheit an dem Abschlussdeckel geführt ist. In den Abschlussdeckel kann dabei insbesondere die Entlüftung integriert sein; und der Drucklufteinlass kann insbesondere in dem Profilrohr ausgeführt sein, in dessen zylindrischer Innenbohrung der Arbeitskolben der Ausgangseinheit dichtend geführt ist.

Schließlich kann die erfindungsgemäße Schaltkraftunterstützungseinrichtung eine zwischen dem Gehäuse und der Ausgangseinheit und/oder eine zwischen dem Gehäuse und der Steuereinheit wirkende Rastrierung aufweisen, um die korrekten Stellungen der Ausgangseinheit bzw. der Steuereinheit relativ zum Gehäuse durch entsprechende Rastung zu sichern. Eine solche Rastrierung kann dabei insbesondere auch dazu beitragen, Resonanzeffekte zu unterbinden oder zumindest zu reduzieren.

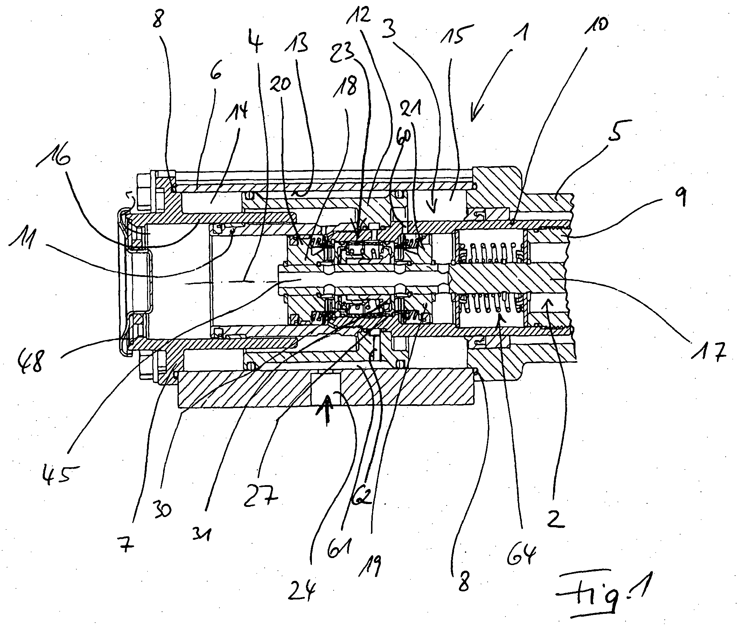

Im Folgenden wird die vorliegende Erfindung anhand eines in der Zeichnung veranschaulichten bevorzugten Ausführungsbeispiels näher erläutert. Dabei zeigt
- Fig. 1: einen Längsschnitt durch den für die vorliegende Erfindung relevanten Bereich einer erfindungsgemäß ausgeführten pneumatischen Schaltkraftunterstützungseinrichtung,
- Fig. 2: in vergrößerter Darstellung den Bereich der Ventilanordnung einer Schaltkraftunterstützungseinrichtung, die derjenigen nach Fig. 1 im Wesentlichen entspricht und gegenüber dieser nur in einzelnen Details abgewandelt ist und

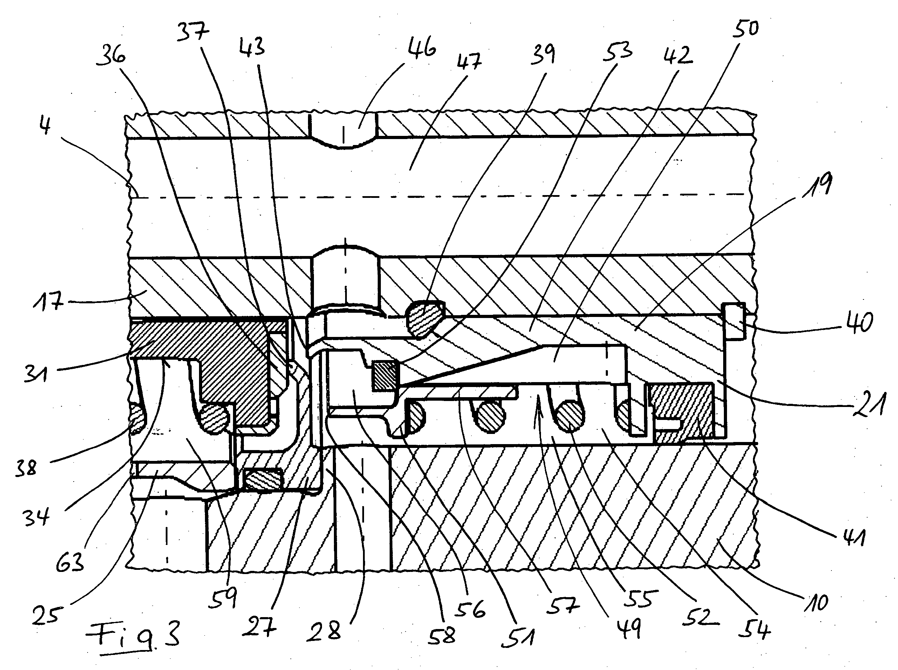

- Fig. 3: einen Teilbereich der in Fig. 2 abgebildeten Ventilanordnung in nochmals vergrößerter Darstellung.

Die in der Zeichnung dargestellte Schaltkraftunterstützungseinrichtung weist drei primäre Funktionseinheiten auf, nämlich eine Gehäusestruktur 1, eine Eingangseinheit 2 und eine diese umgebende Ausgangseinheit 3. Dabei sind die Eingangseinheit 2 und ein Ausgangseinheit 3 längs der Achse 4 relativ zueinander und relativ zu der Gehäusestruktur 1 verschiebbar.

Die Gehäusestruktur 1 ist im Wesentlichen aus drei Komponenten aufgebaut, nämlich einem Gehäuseblock 5, einem Profilrohr 6 und einem Abschlussdeckel 7. Dabei ist das Profilrohr 6 dichtend zwischen dem Gehäuseblock 5 und dem Abschlussdeckel 7 aufgenommen, zu welchem Zweck Dichtungsringe 8 beidseits stirnseitig auf das Profilrohr 6 drücken.

Die Ausgangseinheit 3 ist ebenfalls mehrteilig aufgebaut, indem sie im Wesentlichen aus einem ein Verbindungsstück 9, einem Träger 10, einem Klemmrohr 11 und einem Arbeitskolben 12 zusammengefügt ist. Das Verbindungsstück 9 stellt dabei den eigentlichen Ausgang dar, der mit dem Schaltstangeneingang eines Getriebes koppelbar ist. Der Träger 10 ist auf das Verbindungsstück 9 aufgeschraubt. Und auf den Träger 10 ist hinwiederum das Klemmrohr 11 aufgeschraubt, wobei der Arbeitskolben 12 zwischen dem Klemmrohr 11 und dem Träger 10 eingespannt ist. Der Arbeitskolben 12 ist dabei in einer zylindrischen Innenbohrung 13 des Profilrohres 6 dichtend geführt und definiert zwei pneumatische Arbeitsräume 14, 15. Zur Abdichtung des endseitigen Arbeitsraumes 14 ist das Klemmrohr 11 in einem zylindrischen Ansatz 16 des Abschlussdeckels 7 dichtend verschiebbar geführt.

Die Eingangseinheit 2 besteht im Wesentlichen aus einer Steuerstange 17, welche mit einem Schalthebel koppelbar ist und somit den eigentlichen Eingang der Schaltkraftunterstützungseinrichtung darstellt, und zwei lagefest mit der Steuerstange gekoppelten Kolbenstrukturen 18, 19. Jede der beiden Kolbenstrukturen 18, 19 umfasst dabei einen Ventilkolben 20 bzw. 21, der zur Abgrenzung eines zugeordneten Steuerraumes 22 in einer zylindrischen Bohrung der Ausgangseinheit 3 dichtend verschiebbar geführt ist, nämlich der endseitige Ventilkolben 20 in dem Klemmrohr 11 und der andere Ventilkolben 21 in dem Träger 10.

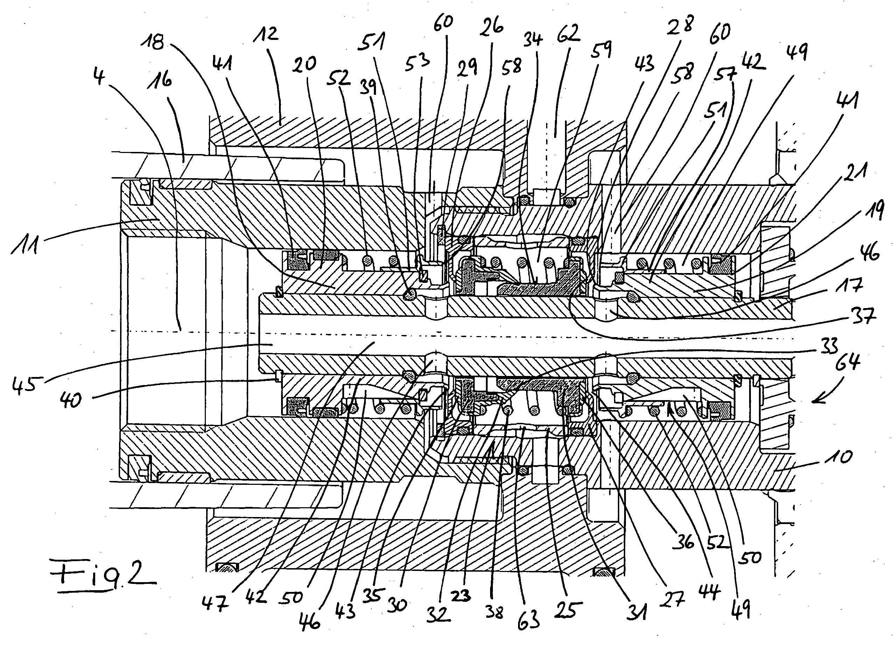

Die beiden Kolbenstrukturen 18, 19 bilden dabei einen funktionalen Bestandteil einer Ventilanordnung 23 (vgl. Fig. 2), die funktional zwischen der Steuerstange 17 und der Ausgangseinheit 3 und strömungstechnisch zwischen einem an der Gehäusestruktur 1, nämlich an dem Profilrohr 6 angeordneten Drucklufteinlass 24 und den beiden pneumatischen Arbeitsräumen 14, 15 vorgesehen ist und durch entsprechende Beaufschlagung der beiden pneumatischen Arbeitsräume 14, 15 mit Druckluft eine pneumatische Folgeregelung der Ausgangseinheit 3 zu der Steuerstange 17 bewirkt. Die Ventilanordnung 23 ist dabei im Einzelnen wie nachstehend dargelegt aufgebaut:

In der Ausgangseinheit 3, nämlich in dem Träger 10 sind in einem vorgegebenen, durch eine Distanzhülse 25 definierten und eingehaltenen Abstand zueinander zwei Ventilsitze 26, 27 lagefest aufgenommen. Die Lagesicherung erfolgt dabei einerseits mittels eines Absatzes 28 und andererseits mittels eines Sicherungsringes 29. In dem Raum zwischen den beiden Ventilsitzen 26, 27 sind zwei Ventilschieber 30, 31 aufgenommen, die beide auf der Steuerstange 17 verschiebbar geführt und gegeneinander abgedichtet sind. Zum Zwecke der Abdichtung ist mit dem einen Ventilschieber 30 ein elastomeres Dichtelement 32 verbunden, welches eine radiale ringförmige Dichtkante 33 aufweist, die auf einer zylindrischen Dichtfläche 34 des anderen Ventilschiebers 31 dichtend gleitet. Beide Ventilschieber 30, 31 weisen weiterhin stirnseitig eine ebenfalls elastomere Dichtfläche 35 bzw. 36 auf, die mit einer Dichtkante 37 des jeweils zugeordneten Ventilsitzes 26 bzw. 27 zusammenwirkt. Mittels einer zwischen den beiden Ventilschiebern 30, 31 angeordneten Druckfederanordnung 38 werden die beiden Ventilschieber 30, 31 jeweils gegen den zugeordneten Ventilsitz 26 bzw. 27 vorspannt.

Die beiden jeweils zwischen einem Dichtring 39 und einem Sicherungsring 40 auf der Steuerstange 17 festgelegten Kolbenstrukturen 18 bzw. 19 umfassen jeweils neben dem eigentlichen, einen an der Ausgangseinheit 3 dichtend gleitenden Dichtring 41 aufweisenden Ventilkolben 20 bzw. 21 einen zylindrischen Ansatz 42. An diesen ist jeweils stirnseitig eine ringförmige Dichtkante 43 ausgeführt, welche jeweils mit dem zugeordneten Ventilschieber 30 bzw. 31 zusammenwirken kann, um diesen von dem betreffenden Ventilsitz 26 bzw. 27 abzuheben. Hierzu steht die ringförmige Dichtkante 43 jeweils radial innerhalb des zugeordneten Ventilsitzes 26 bzw. 27 der elastomeren Dichtfläche 35 bzw. 36 des betreffenden Ventilschiebers 30 bzw. 31 gegenüber. In der in der Zeichnung abgebildeten neutralen Stellung halten die beiden ringförmigen Dichtkanten 43 allerdings zu den Ventilschiebern 30 bzw. 31 jeweils einen vorgegebenen Abstand ein, so dass jeweils zwischen der betreffenden Dichtkante 43 und dem zugeordneten Ventilschieber 30 bzw. 31 ein Ringspalt 44 besteht, der über eine Abluftpassage 45, welche eine individuelle radiale Bohrung 46 und eine gemeinsame axiale Bohrung 47 in der Steuerstange 17 umfasst, mit der endseitig an der Gehäusestruktur 1, nämlich dem Abschlussdeckel 8 angeordneten Entlüftung 48 kommuniziert.

An den beiden Kolbenstrukturen 18 bzw. 19, nämlich an den zylindrischen Ansätzen 42 derselben sind weiterhin jeweils drei gleichmäßig um die Achse herum verteilt angeordnete Drosselpassagen 49 ausgeführt. Die Drosselpassagen 49 sind dabei jeweils durch eine im jeweiligen Ansatz 42 der Kolbenstruktur 18 bzw. 19 ausgeführt Nut 50 gebildet, deren radiale Tiefe sich in axialer Richtung der Steuerstange 17 verändert, nämlich in Richtung auf den jeweiligen Ventilkolben 20 bzw. 21 hin zunimmt. Weiterhin ist auf dem zylindrischen Ansatz 42 jeder Kolbenstruktur 18 bzw. 19 jeweils ein hülsenförmig ausgebildeter Drosselschieber 51 längsverschieblich geführt. Der Drosselschieber wird dabei jeweils mittels einer sich an dem zugeordneten Ventilkolben 20 bzw. 21 abstützenden Vorspannfeder 52 in Richtung auf einen Sicherungsring 53, der einen Anschlag bildet, axial vorgespannt. Der Drosselschieber 51 stellt in dem Sinne jeweils eine Begrenzung für die zugeordneten Drosselpassagen 49 dar, als der Strömungsweg zwischen dem vor dem Ventilkolben 20 bzw. 21 liegenden Teil 54 des Steuerraumes 55 und dem benachbart dem betreffenden Ventilsitz 26 bzw. 27 liegenden Teil 56 des Steuerraumes 55 maßgeblich durch das Zusammenwirken des Hemdes 57 des jeweiligen Drosselschiebers 51 und der in dem Ansatz 42 der zugeordneten Kolbenstruktur 18 bzw. 19 ausgebildeten Nut 50 definiert wird. Der engste Querschnitt des betreffenden Strömungsweges und somit die in der Drosselpassage wirksame Drosselwirkung hängt dabei entscheidend von der Stellung ab, die der Drosselschieber 51 relativ zu der zugeordneten Kolbenstruktur 18 bzw. 19 einnimmt.

Die Drosselschieber 51 weisen jeweils stirnseitig eine mit dem jeweils zugeordneten Ventilsitz 26 bzw. 27 zusammenwirkende Schließkante 58 auf. Wird die Steuerstange 17 relativ zu der Ausgangseinheit 3 verschoben, so dichtet die Dichtkante 43 einer der Kolbenstrukturen 18 bzw. 19 an der Dichtfläche 35 bzw. 36 des zugeordneten Ventilschiebers 30 bzw. 31 ab und hebt diesen bei fortgesetzter Bewegung des Steuerstange 17 von dem zugeordneten Ventilsitz 26 bzw. 27 ab. Hierdurch wird der zwischen den beiden Ventilsitzen 26 und 27 angeordnete, radial innen von den beiden Ventilschiebern 30 und 32 begrenzte Druckluftraum 59 mit dem dem betreffenden Ventilsitz 26 bzw. 27 benachbarten Teil 56 des Steuerraumes 55 verbunden. Zugleich wird, indem die Schließkante 58 des betreffenden Drosselschiebers 51 auf den Ventilsitz 26 bzw. 27 auftrifft, bei der betreffenden Bewegung der Steuerstange 17 der Drosselschieber 51 (gegen die Kraft der Vorspannfeder 52) relativ zur Kolbenstruktur 18 bzw. 19 verschoben, so dass sich die Drosselpassage 49 (weiter) öffnet. Auf der gegenüberliegenden Seite der Ventileinheit 23 bleibt demgegenüber der Steuerraum 55 mit der Abluftpassage 45 verbunden.

Jeder der beiden Steuerräume 55 kommuniziert ständig über eine in diesen mündende, in der Ausgangseinheit 3 angeordnete Passage 60 mit dem zugeordneten pneumatischen Arbeitsraum 14 bzw. 15. Weiterhin steht der Druckluftraum 59 ständig mit dem Drucklufteinlass 24 in Verbindung. Hierzu ist äußeren Umfang des Arbeitskolbens 12 ein mit dem Drucklufteinlass 24 in Verbindung stehender, von dem Profilrohr 6 der Gehäusestruktur 1 begrenzter Ringraum 61 ausgebildet, der über eine in der Ausgangseinheit 3 ausgeführte Druckluftpassage 62 und einen in der Distanzhülse 25 ausgeführten Durchbruch 63 ständig mit dem Druckluftraum 59 in Verbindung steht.

Zwischen der Steuerstange 17 und der Ausgangseinheit 3 wirkt eine Zentrierfederanordnung 64, welche die neutrale Stellung dieser beiden Teile relativ zueinander vorgibt, in der, wie oben erläutert, beide pneumatischen Arbeitsräume 14 und 15 mit der Entlüftung 48 kommunizieren.

## Patentansprüche

1. Pneumatische Schaltkraftunterstützungseinrichtung für ein Schaltgetriebe, umfassend eine einen Drucklufteinlass (24) und eine Entlüftung (48) aufweisende Gehäusestruktur (1), eine eingangsseitige, längs ihrer Achse (4) verschiebbare Steuerstange (17) und eine die Steuerstange umgebende, parallel zu dieser verschiebbare Ausgangseinheit (3), welche einen in der Gehäusestruktur dichtend geführten, zwei pneumatische Arbeitsräume (14, 15) definierenden Arbeitskolben (12) umfasst, wobei funktional zwischen der Steuerstange und der Ausgangseinheit und strömungstechnisch zwischen dem Drucklufteinlass und den pneumatischen Arbeitsräumen eine Ventilanordnung (23) vorgesehen ist, welche durch entsprechende Beaufschlagung der beiden pneumatischen Arbeitsräume eine pneumatische Folgeregelung der Ausgangseinheit zu der Steuerstange bewirkt und zwei mit der Steuerstange gekoppelte, an der Ausgangseinheit dichtend verschiebbar geführte Ventilkolben (20, 21) und zwei mit der Steuerstange gekoppelte ringförmige Dichtkanten (43), welche jeweils mit einem relativ zur Steuerstange sowie zur Ausgangseinheit längsverschiebbar geführten Ventilschieber (30, 31) zusammenwirken, umfasst, wobei jeder der beiden Ventilschieber weiterhin jeweils mit einem der Ausgangseinheit zugeordneten Ventilsitz (26, 27) zusammenwirkt und zumindest einem Ventilkolben, bevorzugt beiden Ventilkolben je ein relativ zu diesem verschiebbarer Drosselschieber (51) zugeordnet ist, der eine mit dem jeweils zugeordneten Ventilsitz zusammenwirkende Schließkante (58) aufweist und mindestens eine Drosselpassage (49) begrenzt, **dadurch gekennzeichnet, dass** die Querschnittsfläche der mindestens einen Drosselpassage (49) von der relativen Position des Drosselschiebers bezogen auf den zugeordneten Ventilkolben abhängt.

2. Schaltkraftunterstützungseinrichtung nach Anspruch 1, **dadurch gekennzeichnet, dass** die Ventilkolben (20, 21) lagefest mit der Steuerstange (17) gekoppelt sind.

3. Schaltkraftunterstützungseinrichtung nach Anspruch 1, **dadurch gekennzeichnet, dass** die Ventilkolben (20, 21) mit der Steuerstange (17) in deren Axialrichtung verschiebbar gekoppelt sind.

4. Schaltkraftunterstützungseinrichtung nach einem der Ansprüche 1 bis 3, **dadurch gekennzeichnet, dass** die ringförmigen Dichtkanten (43) lagefest mit der Steuerstange (17) gekoppelt sind.

5. Schaltkraftunterstützungseinrichtung nach einem der Ansprüche 1 bis 3, **dadurch gekennzeichnet, dass** die ringförmigen Dichtkanten (43) mit der Steuerstange (17) in deren Axialrichtung verschiebbar gekoppelt sind.

6. Schaltkraftunterstützungseinrichtung nach einem der Ansprüche 1 bis 5, **dadurch gekennzeichnet, dass** die Drosselpassage (49) eine lineare Charakteristik im Sinne einer linearen Veränderung ihrer Querschnittsfläche über ihre axiale Erstreckung aufweist.

7. Schaltkraftunterstützungseinrichtung nach einem der Ansprüche 1 bis 5, **dadurch gekennzeichnet, dass** die Drosselpassage (49) eine progressive Charakteristik im Sinne einer progressiven Vergrößerung ihrer Querschnittsfläche über ihre axiale Erstreckung aufweist.

8. Schaltkraftunterstützungseinrichtung nach einem der Ansprüche 1 bis 5, **dadurch gekennzeichnet, dass** die Drosselpassage (49) eine degressive Charakteristik im Sinne einer degressiven Vergrößerung ihrer Querschnittsfläche über ihre axiale Erstreckung aufweist.

9. Schaltkraftunterstützungseinrichtung nach einem der Ansprüche 1 bis 8, **dadurch gekennzeichnet, dass** die Ventilkolben (20,21) Teil jeweils einer Kolbenstruktur (18, 19) sind, welche weiterhin einen die mindestens eine Drosselpassage (49) begrenzenden zylindrischen Ansatz (42) umfasst.

10. Schaltkraftunterstützungseinrichtung nach einem der Ansprüche 1 bis 9, **dadurch gekennzeichnet, dass** der Drosselschieber (51) hülsenförmig ausgebildet und auf dem zugeordneten Ansatz (42) der Kolbenstruktur (18, 19) längsverschieblich geführt ist.

11. Schaltkraftunterstützungseinrichtung nach Anspruch 10, **dadurch gekennzeichnet, dass** die mindestens eine Drosselpassage (49) eine in dem jeweiligen Ansatz (42) der Kolbenstruktur (18, 19) ausgeführt Nut (50) umfasst, wobei sich in axialer Richtung der Steuerstange (17) die radiale Tiefe und/oder die in Umfangsrichtung gemessene Breite der Nut verändert.

12. Schaltkraftunterstützungseinrichtung nach einem der Ansprüche 1 bis 11, **dadurch gekennzeichnet, dass** jeweils mindestens zwei Drosselpassagen (49) vorgesehen sind, die bevorzugt gleichmäßig um die Achse (4) der Steuerstange (17) herum angeordnet sind.

13. Schaltkraftunterstützungseinrichtung nach Anspruch 12, **dadurch gekennzeichnet, dass** die Drosselpassagen (49) eine unterschiedliche axiale Erstreckung aufweisen.

14. Schaltkraftunterstützungseinrichtung nach einem der Ansprüche 1 bis 13, **dadurch gekennzeichnet, dass** auf die beiden Drosselschieber (51) jeweils eine sich an dem zugeordneten Ventilkolben (20, 21) abstützende Vorspannfeder (52) wirkt.

15. Schaltkraftunterstützungseinrichtung nach einem der Ansprüche 1 bis 14, **dadurch gekennzeichnet, dass** jeder der Ventilkolben (20, 21) einen Steuerraum (55) begrenzt, der über eine in diesen mündende, in der Ausgangseinheit (3) angeordnete Passage (60) mit dem zugeordneten pneumatischen Arbeitsraum (14, 15) kommuniziert und bei von dem zugeordneten Ventilschieber (30, 31) abgehobener Dichtkante (43) über eine in der Steuerstange (17) vorgesehene Abluftpassage (45) mit der Entlüftung (48) kommuniziert.

16. Schaltkraftunterstützungseinrichtung nach einem der Ansprüche 1 bis 15, **dadurch gekennzeichnet, dass** ein in der Ausgangseinheit (3) zwischen den beiden Ventilsitzen (26, 27) angeordneter Druckluftraum (59) ständig mit dem Drucklufteinlass (24) in Verbindung steht.

17. Schaltkraftunterstützungseinrichtung nach einem der Ansprüche 1 bis 16, **dadurch gekennzeichnet, dass** die Schließkanten (58) der Drosselschieber (51) zur vollständigen Abdichtung gegenüber dem jeweils zugeordneten Ventilsitz (26, 27) ausgeführt sind.

18. Schaltkraftunterstützungseinrichtung nach einem der Ansprüche 1 bis 16, **dadurch gekennzeichnet, dass** die Schließkanten (58) der Drosselschieber (51) zur weitgehenden Abdichtung gegenüber dem jeweils zugeordneten Ventilsitz (26, 27) unter Erhaltung einer definierten Undichte ausgeführt sind.

## Claims

1. A pneumatic gear shift assist device for a gearbox, comprising a housing structure (1), which has a compressed air inlet (24) and a ventilation means (48), a control rod (17) on the input side, which can be displaced along the axis (4) thereof, and an output unit (3), which surrounds the control rod, is displaceable parallel to same and comprises a working piston (12), which is guided in a sealing manner in the housing structure and defines two pneumatic working chambers (14, 15), wherein a valve arrangement (23) is provided functionally between the control rod and the output unit and in terms of flow between the compressed air inlet and the pneumatic working chambers, said valve arrangement effecting pneumatic sequential control of the output unit to the control rod by corresponding loading of the two pneumatic working chambers and comprising two valve pistons (20, 21), which are coupled to the control rod and are guided in a sealing, displaceable manner on the output unit, and two annular sealing edges (43), which are coupled to the control rod and each interact with a valve slide (30, 31), which is guided in a longitudinally displaceable manner relative to the control rod and to the output unit, wherein each of the two valve slides also interacts with a valve seat (26, 27) assigned to the output unit, and a throttle slide (51) is assigned to at least one valve piston, preferably one throttle slide is assigned to each of the two valve pistons, said throttle slide being displaceable relative to the valve piston(s) and having a closing edge (58), which interacts with the respectively assigned valve seat, and limiting at least one throttle passage (49), **characterised in that** the cross-sectional area of the at least one throttle passage (49) depends on the relative position of the throttle slide in relation to the associated valve piston.

2. The gear shift assist device according to Claim 1, **characterised in that** the valve pistons (20, 21) are coupled in a positionally fixed manner to the control rod (17).

3. The gear shift assist device according to Claim 1, **characterised in that** the valve pistons (20, 21) are coupled to the control rod (17) such that they can be displaced in the axial direction thereof.

4. The gear shift assist device according to any one of Claims 1 to 3, **characterised in that** the annular sealing edges (43) are coupled in a positionally fixed manner to the control rod (17).

5. The gear shift assist device according to any one of Claims 1 to 3, **characterised in that** the annular sealing edges (43) are coupled to the control rod (17) such that they can be displaced in the axial direction thereof.

6. The gear shift assist device according to any one of Claims 1 to 5, **characterised in that** the throttle passage (49) has a linear characteristic curve in the sense of a linear change in the cross-sectional area thereof over the axial extent thereof.

7. The gear shift assist device according to any one of Claims 1 to 5, **characterised in that** the throttle passage (49) has a progressive characteristic curve in the sense of a progressive increase in the cross-sectional area thereof over the axial extent thereof.

8. The gear shift assist device according to any one of Claims 1 to 5, **characterised in that** the throttle passage (49) has a degressive characteristic curve in the sense of a degressive increase in the cross-sectional area thereof over the axial extent thereof.

9. The gear shift assist device according to any one of Claims 1 to 8, **characterised in that** the valve pistons (20, 21) are each part of a piston structure (18, 19) that also comprises a cylindrical extension (42), which delimits the at least one throttle passage (49).

10. The gear shift assist device according to any one of Claims 1 to 9, **characterised in that** the throttle slide (51) is sleeve-shaped and is guided in a longitudinally displaceable manner on the associated extension (42) of the piston structure (18, 19).

11. The gear shift assist device according to Claim 10, **characterised in that** the at least one throttle passage (49) comprises a groove (50) made in the respective extension (42) of the piston structure (18, 19), the radial depth and/or the width, measured in the circumferential direction, of the groove changing in the axial direction of the control rod (17).

12. The gear shift assist device according to any one of Claims 1 to 11, **characterised in that** in each case at least two throttle passages (49) are provided, which are preferably arranged uniformly around the axis (4) of the control rod (17).

13. The gear shift assist device according to Claim 12, **characterised in that** the throttle passages (49) have a different axial extent.

14. The gear shift assist device according to any one of Claims 1 to 13, **characterised in that** in each case one prestress spring (52) acts on the two throttle slides (51), said prestress spring being supported on the associated valve piston (20, 21).

15. The gear shift assist device according to any one of Claims 1 to 14, **characterised in that** each of the valve pistons (20, 21) delimits a control chamber (55), which communicates with the associated pneumatic working chamber (14, 15) via a passage (60), which issues into the control chamber and is arranged in the output unit (3), and communicates with the ventilation means (48) via an exhaust air passage (45) provided in the control rod (17) when the sealing edge (43) lifts off from the associated valve slide (30, 31).

16. The gear shift assist device according to any one of Claims 1 to 15, **characterised in that** a compressed air chamber (59) arranged in the output unit (3) between the two valve seats (26, 27) is constantly connected to the compressed air inlet (24).

17. The gear shift assist device according to any one of Claims 1 to 16, **characterised in that** the closing edges (58) of the throttle slides (51) are formed for complete sealing with respect to the respectively associated valve seat (26, 27).

18. The gear shift assist device according to any one of Claims 1 to 16, **characterised in that** the closing edges (58) of the throttle slides (51) are formed for substantial sealing with respect to the respectively associated valve seat (26, 27) while maintaining a defined leak.

## Revendications

1. Dispositif pneumatique d'assistance au changement de vitesse pour une boîte de vitesses, comprenant une structure de logement (1) présentant une admission d'air pressurisé (24) et une purge d'air (48), une tige de commande (17) du côté d'entrée, coulissable le long de son axe (4) et une unité de sortie (3) entourant la tige de commande, coulissable parallèlement à celle-ci, qui comprend de piston de travail (12) définissant deux chambres de travail pneumatique (14, 15), guidées de manière étanche dans la structure de logement, dans lequel fonctionnellement entre la tige de commande et l'unité de sortie et fluidiquement entre l'admission d'air pressurisé et les chambres de travail pneumatique un dispositif de soupape (23) est prévu, qui provoque par une sollicitation correspondante de deux chambres de travail pneumatique une régulation en cascade pneumatique de l'unité de sortie vers le la tige de commande et comprend deux pistons de soupape (20, 21) couplés à la tige de commande, guidés de manière coulissable de manière étanche sur l'unité de sortie et deux bords d'étanchéité (43) annulaires couplés à la tige de commande, qui coopèrent respectivement avec un tiroir de soupape (30, 31) guidé de manière coulissable longitudinalement par rapport à la tige de commande ainsi que l'unité de sortie, dans lequel chacun des deux tiroirs de soupape coopère en outre respectivement avec un siège de soupape (26, 27) coordonné à l'unité de sortie et au moins un piston de soupape, de préférence les deux pistons de soupape est coordonné respectivement à une soupape à pointeau (51) coulissable par rapport à ces derniers, qui présente un bord d'étanchéité (58) coopérant avec le siège de soupape respectivement coordonné et délimite au moins un passage d'étranglement (49), **caractérisé en ce que** la surface de section transversale d'au moins un passage d'étranglement (49) dépend de la position relative de la soupape à pointeur par rapport au piston de soupape coordonné.

2. Dispositif pneumatique d'assistance au changement de vitesse selon la revendication 1, **caractérisé en ce que** les pistons de soupape (20, 21) sont couplés de manière stationnaire avec la tige de commande (17).

3. Dispositif pneumatique d'assistance au changement de vitesse selon la revendication 1, **caractérisé en ce que** les pistons de soupape (20, 21) sont couplés avec la tige de commande (17) de manière coulissable dans la direction axiale de celle-ci.

4. Dispositif pneumatique d'assistance au changement de vitesse selon une des revendications 1 à 3, **caractérisé en ce que** les bords d'étanchéité annulaires (43) sont couplés de manière stationnaire avec la tige de commande (17).

5. Dispositif pneumatique d'assistance au changement de vitesse selon une des revendications 1 à 3, **caractérisé en ce que** les bords d'étanchéité annuaires (43) sont couplés avec la tige de commande (17) de manière coulissable dans la direction axiale de celle-ci.

6. Dispositif pneumatique d'assistance au changement de vitesse selon une des revendications 1 à 5, **caractérisé en ce que** le passage d'étranglement (49) présente une caractéristique linéaire dans le sens d'une variation linéaire de sa surface de section transversale sur son extension axiale.

7. Dispositif pneumatique d'assistance au changement de vitesse selon une des revendications 1 à 5, **caractérisé en ce que** le passage d'étranglement (49) présente une caractéristique progressive dans le sens d'un agrandissement progressif de sa surface de section transversale sur son extension axiale.

8. Dispositif pneumatique d'assistance au changement de vitesse selon une des revendications 1 à 5, **caractérisé en ce que** le passage d'étranglement (49) présente une caractéristique dégressive dans le sens d'un agrandissement dégressif de sa surface de section transversale sur son extension axiale.

9. Dispositif pneumatique d'assistance au changement de vitesse selon une des revendications 1 à 8, **caractérisé en ce que** les pistons de soupape (20, 21) sont des parties d'une structure de piston respective (18, 19), qui comprend en outre un épaulement (42) cylindrique délimitant au moins un passage d'étranglement (49).

10. Dispositif pneumatique d'assistance au changement de vitesse selon une des revendications 1 à 9, **caractérisé en ce que** la soupape à pointeau (51) est conçue forme de manchon et est guidée de manière coulissable longitudinalement sur l'épaulement coordonné (42) de la structure de piston (18, 19).

11. Dispositif pneumatique d'assistance au changement de vitesse selon la revendication 10, **caractérisé en ce que** au moins un passage d'étranglement (49) comprend une rainure (50) ménagée dans l'épaulement respectif (42) de la structure de piston (18, 19), dans lequel dans la direction axiale de la tige de commande (17) la profondeur radiale et/ou la largeur mesurée dans la direction circonférentielle de la rainure varie.

12. Dispositif pneumatique d'assistance au changement de vitesse selon une des revendications 1 à 11, **caractérisé en ce que** respectivement au moins deux passages d'étranglement (49) sont prévus, qui sont disposés de préférence uniformément autour de l'axe (4) de la tige de commande (17).

13. Dispositif pneumatique d'assistance au changement de vitesse selon la revendication 12, **caractérisé en ce que** les passages d'étranglement (49) présentent une extension axiale différente.

14. Dispositif pneumatique d'assistance au changement de vitesse selon une des revendications 1 à 13, **caractérisé en ce que** sur les deux soupapes à pointeur (51) agit respectivement un ressort de précontrainte (52) s'appuyant sur le piston de soupape coordonné (20, 21).

15. Dispositif pneumatique d'assistance au changement de vitesse selon une des revendications 1 à 14, **caractérisé en ce que** chacun des pistons de soupape (20, 21) délimite une chambre de commande (55), qui communique par l'intermédiaire d'un passage (60) disposé dans l'unité de sortie (3), débuchant dans celle-ci avec la chambre de travail (14, 15) pneumatique coordonnée et, lorsque le bord d'étanchéité (43) du tiroir de soupape coordonné (30, 31) est supprimé, communique par l'intermédiaire d'un passage d'échappement d'air (45) prévu dans la tige de commande (17) avec la purge d'air (48).

16. Dispositif pneumatique d'assistance au changement de vitesse selon une des revendications 1 à 15, **caractérisé en ce que** une chambre d'air pressurisé (59) disposé dans l'unité de sortie (3) entre les deux sièges de soupape (26, 27) est en liaison constante avec l'admission d'air pressurisé (24).

17. Dispositif pneumatique d'assistance au changement de vitesse selon une des revendications 1 à 16, **caractérisé en ce que** les bords d'étanchéité (58) de la soupape à pointeau (51) sont conçus afin d'isoler de manière totalement étanche par rapport au siège de soupape (26, 27) respectivement coordonné.

18. Dispositif pneumatique d'assistance au changement de vitesse selon une des revendications 1 à 16, **caractérisé en ce que** les bords d'étanchéité (58) de la soupape à pointeau (51) sont conçus afin d'isoler de manière essentiellement étanche par rapport au siège de soupape (26, 27) respectivement coordonné en conservant une absence d'étanchéité définie.
